# EUROPEAN PATENT SPECIFICATION

(11) **EP 2 824 023 B1**
(45) Date of publication and mention of the grant of the patent: **06.01.2016**
(21) Application number: 14172946.7
(22) Date of filing: 18.06.2014
(51) Int. Cl.: B62J 35/00, B62K 11/04, B62K 19/16, B62K 19/30

(54) **Motorcycle**
Motorrad
Motocyclette

(30) Priority: 10.07.2013 JP 2013144355
(43) Date of publication of application: 14.01.2015
(73) Proprietor: Honda Motor Co., Ltd., Tokyo 107-8556 (JP)
(72) Inventor: Mizukura, Yuki, Saitama, 351-0193 (JP); Sasaki, Takashi, Saitama, 351-0193 (JP)
(74) Representative: Beder, Jens

(56) References cited:
- EP-A1- 1 790 559
- EP-A2- 1 449 754
- US-A1- 2008 000 707

## Description

The present invention relates to a motorcycle having a rear frame structure.

A rear frame structure that is configured such that a rear frame of a motorcycle is integrally formed of resin, and the rear frame is fastened to right and left main frames for supporting an engine is known from JP-U No. S58-49581. In JP-U No. S58-49581, the rear frame is fixed on the main frames by two upper and lower fastening portions provided on a front side of the rear frame.

In the meantime, in the same way as the existing rear frame, when the rear frame is fixed on a front fame through a front portion, it becomes a problem that the rear frame is successfully fixed by suppressing stress concentration on the front portion.

A motorcycle, in which all features of the precharacterizing part of claim 1 are disclosed, is described in US 2008/000707A1.

EP 1 449 754 A2 discloses a motorcycle in which a seat supporting member extending rearwardly from the body frame of the motorcycle comprises an upper seat supporting member holding the seat of the motorcycle, and a lower seat supporting member positioned downwardly of the upper seat supporting member.

Further, there is known from EP 1 790 559 A1 a motorcycle in which the seat includes a resinous seat frame attached to the body frame of the motorcycle.

It is an object of the present invention is to provide a motorcycle in which a rear frame is successfully fixed in a rear frame structure of the motorcycle.

This object is achieved by a motorcycle according to the enclosed independent claim 1. Advantageous features of the present invention are defined in the corresponding subclaims.

In a motorcycle according to the present invention, an upper fastening portion and a lower fastening portion are distributedly arranged on a front side and a rear side of an output shaft to enable an increase in a clearance between the upper fastening portion and the lower fastening portion, and stress concentration on a front portion of a rear frame can be suppressed. For this reason, the rear frame can be successfully fixed on a front frame. Also, the stress concentration on the front portion can be effectively dispersed by a front sidewall for coupling the upper fastening portion to the lower fastening portion. Therefore, the stress concentration is suppressed to enable successful fixation of the rear frame.

Also, the upper fastening portion is arranged in a position above a cylinder upper end of an engine and far from the lower fastening portion. For this reason, the stress concentration of the front portion of the rear frame can be effectively suppressed, and the rear frame can be successfully fixed on the front frame.

Also, a closed space can be reinforced by the front sidewall.

Also, a reduction in weight of the front sidewall can be achieved while thickening the front sidewall in a vehicle width direction to ensure rigidity.

Also, an occupant leg straddling space is ensured to enable an increase in the degree of freedom in a riding posture, and also a fuel tank is arranged in a rear position not to cause an obstruction with respect to legs to enable the fuel tank to have a large capacity.

Also, a rear cushion can be protected by the right and left front sidewalls and a front wall of the fuel tank.

Also, air can be discharged from a maintenance opening and a drain opening, thereby suppressing a temperature rise of the rear cushion.
Fig. 1 is a right side view of a motorcycle according to an embodiment of the present invention.
Fig. 2 is a left side view of the motorcycle.
Fig. 3 is a right side view of a front portion of a vehicle body frame.
Fig. 4 is a plan view with the front portion of the vehicle body frame viewed from above.
Fig. 5 is a cross-sectional view of a peripheral construction of an engine.
Fig. 6 is a front view with a rear frame viewed from a front side.
Fig. 7 is a plan view with the rear frame viewed from above.
Fig. 8 is a right side view of the rear frame.
Fig. 9 is a cross-sectional view taken along IX-IX in Fig. 7.
Fig. 10 is a cross-sectional view taken along X-X in Fig. 8.
Fig. 11 is a perspective view showing a state in which the rear frame is attached.
Fig. 12 is a plan view with an air cleaner and front tanks viewed from above.

Hereinafter, an embodiment of the present invention will be described with reference to drawings. Note that, in the explanation, description of directions such as front and rear, right and left, and upper and lower is the same as directions with respect to a vehicle body unless otherwise especially described. Also, in each drawing, a reference sign FR is indicative of a front side of the vehicle body, a reference sign UP is indicative of an upper side of the vehicle body, and a reference sign LE is indicative of a left side of the vehicle body.

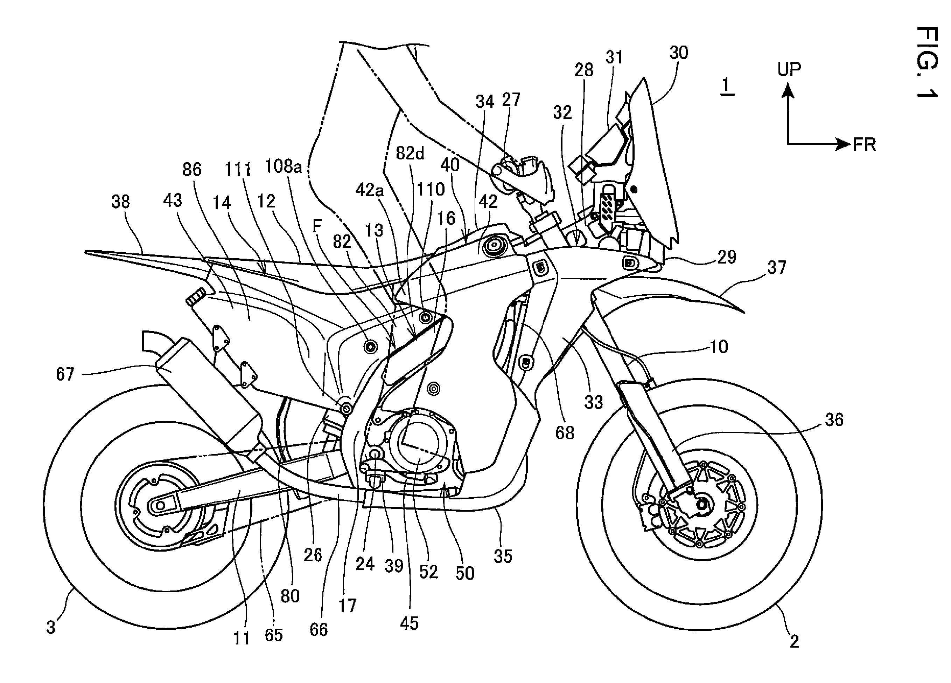

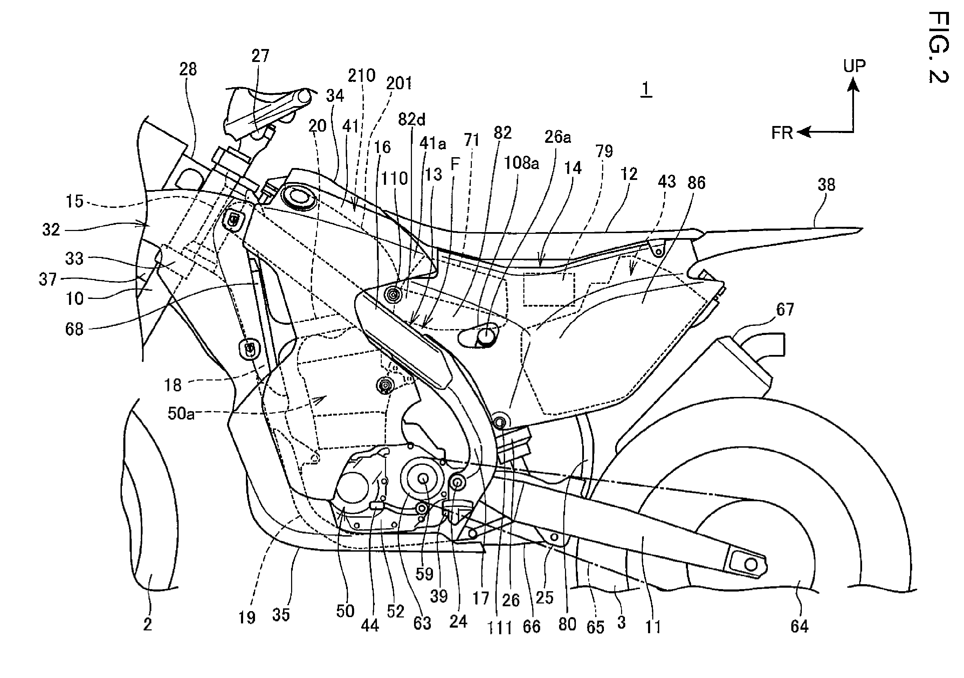

Fig. 1 is a right side view of a motorcycle 1 according to an embodiment of the present invention. Fig. 2 is a left side view of the motorcycle 1.

The motorcycle 1 is a vehicle configured such that an engine 50 as a power unit is supported on a vehicle body frame F, a front fork 10 for supporting a front wheel 2 is steerably supported at a front end of the vehicle body frame F, and a swing arm 11 for supporting a rear wheel 3 is provided to a rear portion of the vehicle body frame F. The motorcycle 1 is a saddle-ride type vehicle configured such that a seat 12 on which an occupant is seated in a straddling manner is provided above the longitudinal center of the vehicle body frame F. The motorcycle 1 is an off-road type vehicle suitable for traveling on an irregular terrain such as sands, has a large suspension stroke, and includes a large-size fuel tank 40.

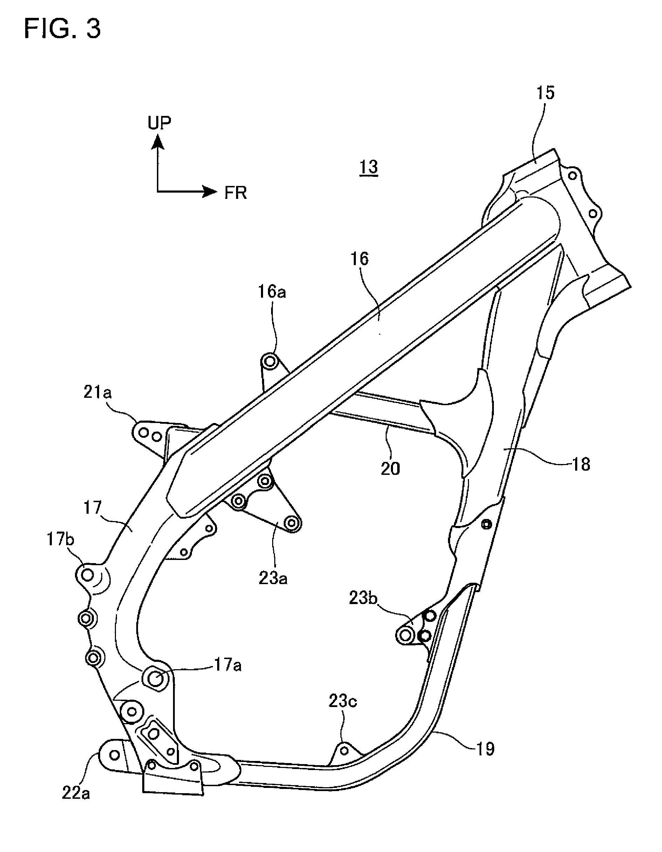

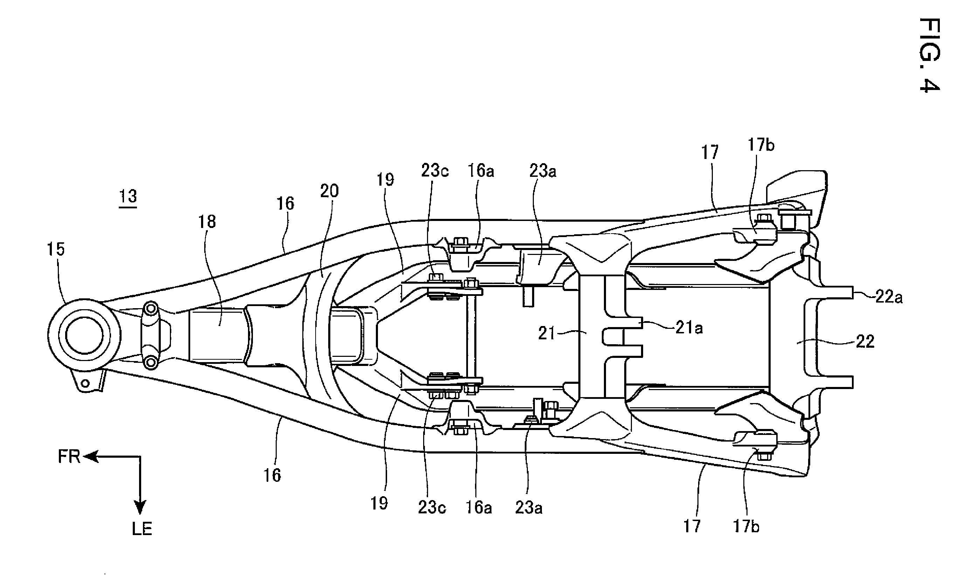

Fig. 3 is a right side view of a front portion of the vehicle body frame F. Fig. 4 is a plan view with the front portion of the vehicle body frame F viewed from above.

As shown in Fig. 1 to Fig. 4, the vehicle body frame F includes a basket-shaped front frame 13 formed by coupling pipe members and plate members to each other by welding or the like, and a resin rear frame 14 coupled to a rear portion of the front frame 13.

The front frame 13 includes a head pipe 15 that is provided at a front end, a pair of right and left main frames 16, 16 that extend while being inclined obliquely downward from the head pipe 15 to a rear side, and a pair of right and left pivot frames 17, 17 that extend downward from rear ends of the respective main frames 16. Also, the front frame 13 includes a down frame 18 that extends downward to the rear from a rear surface of a lower portion of the head pipe 15, and under frames 19, 19 that are branched to a right side and a left side from the down frame 18, that extend downward, that are subsequently curved rearward substantially horizontally, and that are coupled to lower ends of the pivot frames 17, 17.

Also, the front frame 13 includes a reinforcing frame 20 that couples an upper portion of the down frame 18 to the longitudinal intermediate portions of the main frames 16, 16. Further, the front frame 13 includes an upper cross member 21 that couples the upper portions of the right and left pivot frames 17, 17 to each other in a vehicle width direction, and a lower cross member 22 that couples the lower portions of the pivot frames 17, 17 to each other in the vehicle width direction.

The rear portions of the main frames 16, 16, the upper portions of the under frames 19, 19, and the front ends of the horizontal portions of the under frame 19, 19 are provided with engine stays 23a, 23b, 23c to which the engine 50 is fixed.

The lower portions of the pivot frames 17, 17 are respectively formed with pivot holes 17a for supporting a pivot shaft 24 of a swing arm 11. A front end of the swing arm 11 is swingably journaled to the pivot shaft 24, and the rear wheel 3 is journaled to a rear end of the swing arm 11.

The upper cross member 21 is provided with a suspension coupling stay 21a that projects rearward. The lower cross member 22 is provided with a link coupling stay 22a that projects rearward, and a link mechanism 25 coupled to the swing arm 11 is coupled to the link coupling stay 22a. A cylindrical rear suspension unit 26 (rear cushion) is arranged to be inclined forward while having an upper end coupled to the suspension coupling stay 21a and a lower end coupled to the link mechanism 25.

The upper surfaces of the rear portions of the main frames 16, 16 are respectively provided with upper frame stays 16a projecting upward.

The rear surfaces of the vertically intermediate portions of the pivot frames 17, 17 are respectively formed with lower frame stays 17b projecting rearward.

The front fork 10 is rotatably journaled to the head pipe 15 through a steering shaft (not shown), and the front wheel 2 is journaled to the lower end of the front fork 10. A steering handlebar 27 is fixed to the upper end of the front fork 10.

A front stay 28 projecting forward is fixed to the front portion of the head pipe 15, and a headlight 29, a plate-like windshield 30, and meters 31 are supported by the front stay 28.

The fuel tank 40 includes a pair of left and right front tanks 41, 42 that are arranged dividedly on the left side and the right side of the respective main frames 16, 16, and a rear tank 43 that is provided in the rear frame 14.

The seat 12 extends rearward so as to be continuous with the rear portions of the front tanks 41, 42, and is supported by the upper portion of the rear frame 14.

The motorcycle 1 includes a resin vehicle body cover 32. The vehicle body cover 32 is provided with a pair of right and left shrouds 33, 33 that cover the upper portion of the front fork 10 and the down frame 18 from a lateral side, a tank cover 34 that covers the front tanks 41, 42 from above, an under cover 35 that covers the under frame 19 and the engine 50 from below, and a pair of right and left fork covers 36, 36 that cover a lower portion of the front fork 10.

A front fender 37 for covering the front wheel 2 from above is fixed to the front fork 10. A rear fender 38 for covering the rear wheel 3 from above is fixed to the rear frame 14 behind the seat 12.

The lower ends of the pivot frames 17, 17 are provided with a pair of right and left steps 39, 39 for placing feet of the occupant thereon. A front side of the left step 39 is provided with a shift pedal 44, and the front side of the right step 39 is provided with a brake pedal 45.

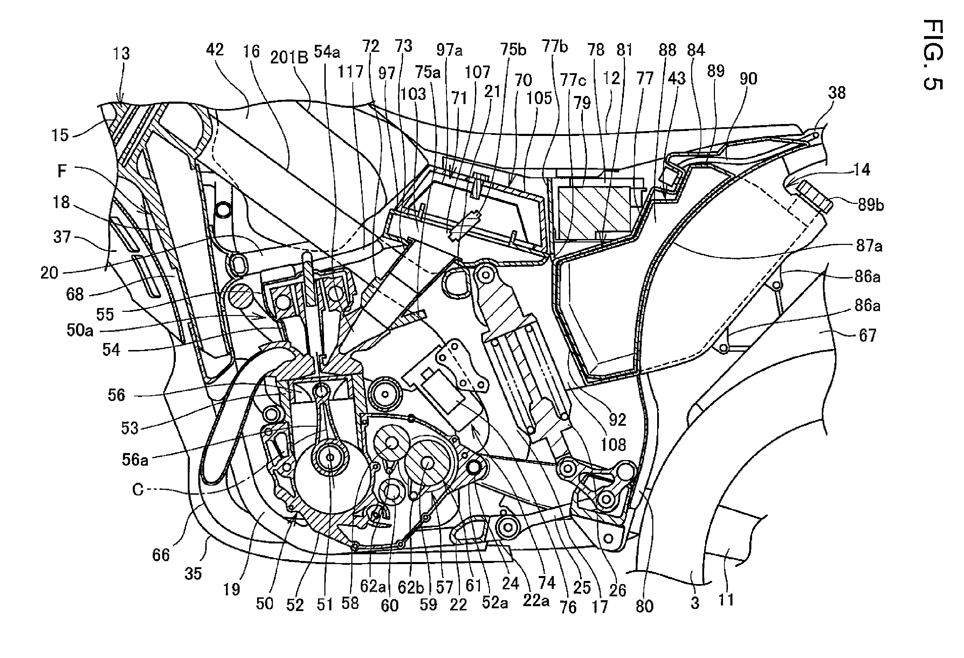

Fig. 5 is a cross-sectional view of a peripheral construction of the engine 50.

As shown in Fig. 1, Fig. 2 and Fig. 5, the engine 50 is a water-cooled single cylinder four-cycle engine, and is supported in the basket-shaped front frame 13. A crankshaft 51 of the engine 50 is arranged to extend horizontally in a vehicle width direction. The engine 50 includes a crankcase 52, and a cylinder portion 50a that projects upward from an upper surface of a front portion of the crankcase 52. The cylinder portion 50a has a cylinder 53, a cylinder head 54 coupled to an upper surface of the cylinder 53, and a head cover 55 (cylinder upper end) for covering a valve chamber for the cylinder head 54. The engine 50 is arranged in such a manner that a cylinder shaft C is slightly inclined forward in comparison with the vertical, and a piston 56 coupled to the crankshaft 51 through a connecting rod 56a is arranged in the cylinder 53.

An upper portion of the head cover 55 overlaps with a lower edge of the reinforcing frame 20 in a side view.

The engine 50 is supported on the front frame 13 not only by the engine stays 23a, 23b, 23C but also by insertion of the pivot shaft 24 into a fixing portion 52a formed in a rear portion of the crankcase 52.

A transmission 57 is incorporated in the rear portion of the engine 50. The transmission 57 is provided with an input shaft 58 driven by the crankshaft 51, an output shaft 59 arranged in parallel to the input shaft 58, and a shift drum 60 rotated by shift operation of the shift pedal 44. A constant mesh type gear train 61 is provide to the input shaft 58 and the output shaft 59, and the gear train 61 is switched by shift forks 62a, 62b interlocked to the shift drum 60, thereby performing shift transmission.

The output shaft 59 projects leftward from the rear portion of the crankcase 52, and a drive sprocket 63 (Fig. 2) is fixed to the shaft end of the output shaft 59. Output of the engine 50 is transmitted to the rear wheel 3 through a drive chain 65 laid between the drive sprocket 63 and a driven sprocket 64 for the rear wheel 3. The drive sprocket 63 is covered with a sprocket cover (not shown).

An exhaust pipe 66 of the engine 50 extends downward to the front from a front surface of the cylinder head 54, is subsequently pulled out rightward, extends rearward along the under frame 19, and is connected to a muffler 67 arranged on a right side of the rear wheel 3. The muffler 67 is supported on the rear frame 14.

A pair of plate-like radiators 68 with cooling water for the engine 50 circulated is provided between the down frame 18 and the right and left shrouds 33, 33.

Each of the front tanks 41, 42 has a size that extends between the shrouds 33, 33 and the rear frame 14, that extends downward from the outer sides of the main fames 16, 16, and that covers the cylinder portion 50a and the lateral side of the front portion of the crankcase 52.

An intake device 70 for the engine 50 is provided below the seat 12 and behind the cylinder head 54. The intake device 70 has an air cleaner 71 taking in outside air after cleaning it, a throttle body 72 connected to an intake port 54a of the cylinder head 54, and a connecting tube 73 connecting the throttle body 72 and the air cleaner 71.

The air cleaner 71 is arranged to be continuous with the rear sides of the front tanks 41, 42, and is also positioned above the rear suspension unit 26. In the embodiment, the air cleaner 71, the connecting tube 73, and the throttle body 72 are linearly arranged downward to the front on a side of the engine 50. Thereby, intake resistance is reduced, and intake efficiency is improved.

A fuel supply system 74 for the engine 50 is installed below the intake device 70. The fuel supply system 74 is provided with injectors 75a, 75b for injecting fuel to an intake passage in the throttle body 72, and a fuel pump 76 for supplying the fuel to the injectors 75a, 75b. Fuels in the front tanks 41, 42 and the rear tank 43 are integrally sucked into the fuel pump 76, and delivered from the fuel tank 76 to the injectors 75a, 75b.

The fuel pump 76 is formed into a cylindrical shape, and is arranged to be inclined forward above the rear portion of the crankcase 52 and in front of the rear suspension unit 26.

The rear frame 14 is provided with an electric component storage portion 77 as an electric component box, the electric component storage portion 77 being arranged behind the air cleaner 71. An ECU 78 as a control section for the motorcycle 1 and a battery 79 are stored in the electric component storage portion 77.

The lower portion of the rear frame 14 is attached with a mud guard 80 extending downward to the front side of the rear wheel 3.

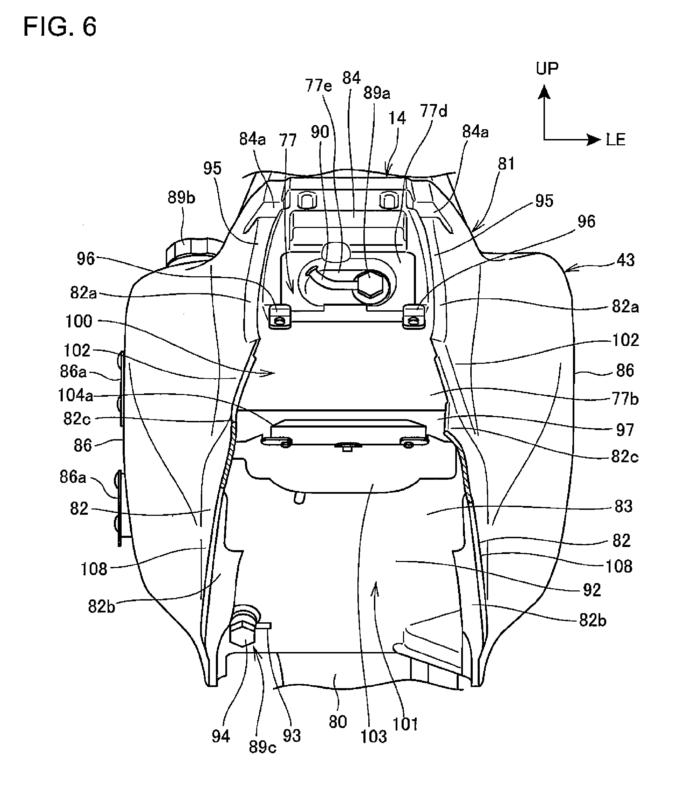

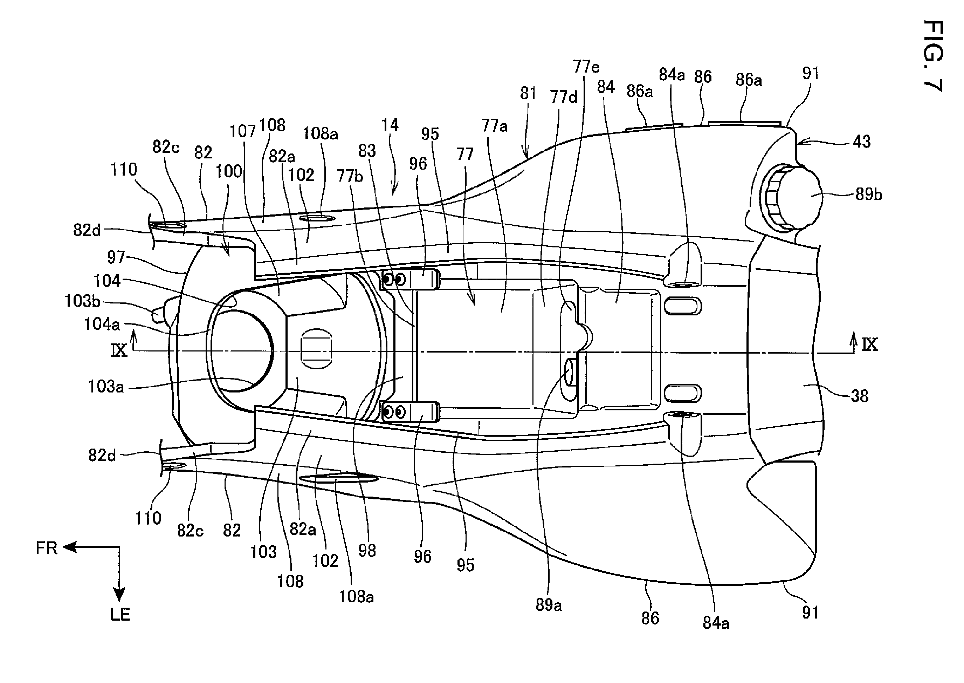

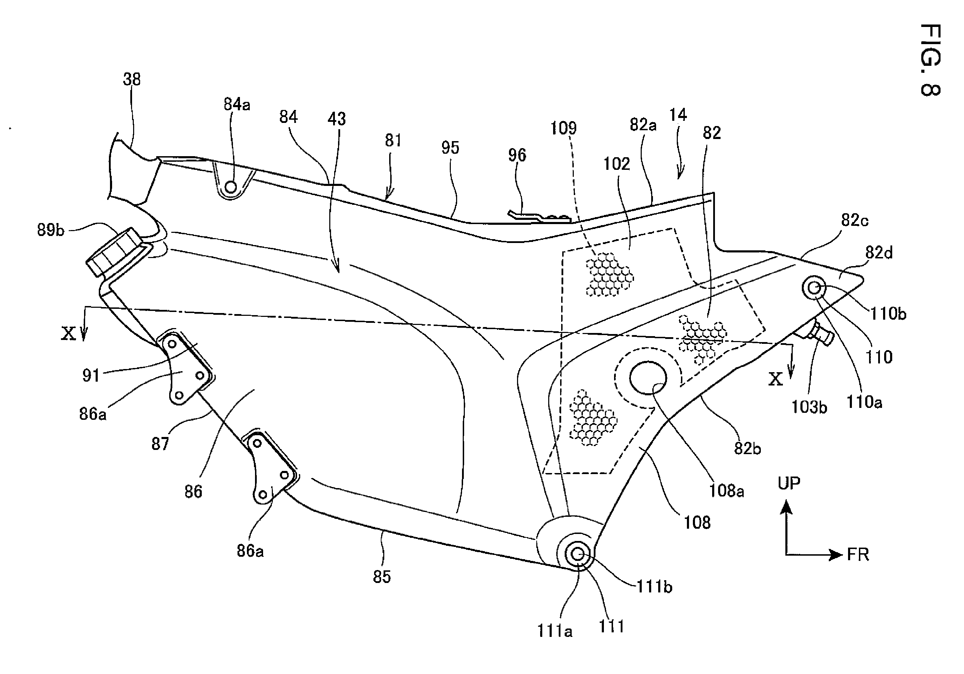

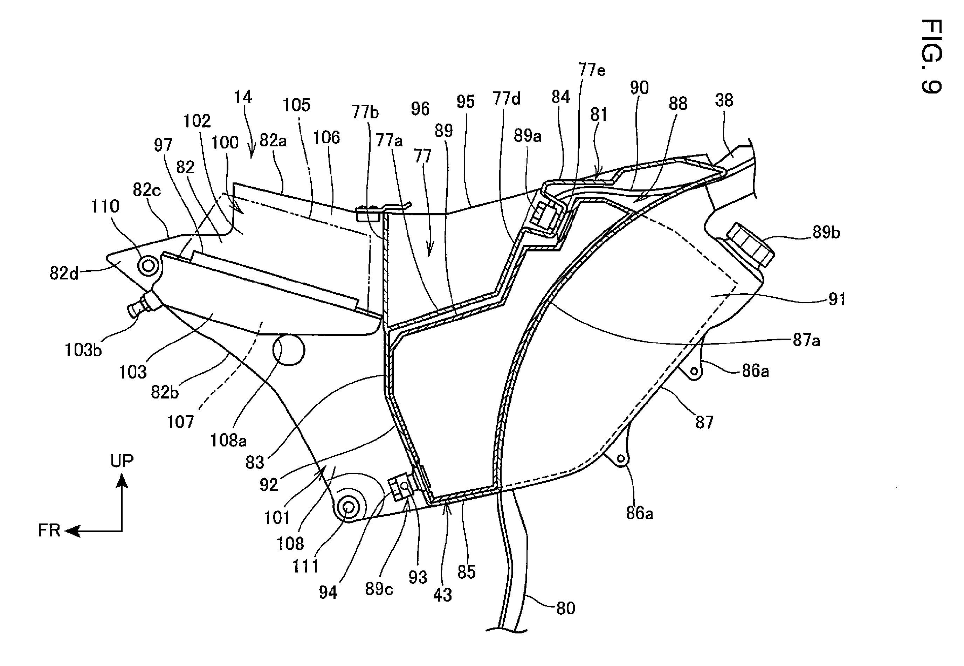

Fig. 6 is a front view with the rear frame 14 viewed from the front side. Fig. 7 is a plan view with the rear frame 14 viewed from above. Fig. 8 is a right side view of the rear frame 14. Fig. 9 is a cross-sectional view taken along IX-IX in Fig. 7. In Fig. 6, the cross-sectional surface of the front end of the rear frame 14 is shown.

The rear frame 14 is provided with a box-shaped portion 81 provided therein with a closed box-shaped space arranged to the rear portion of the rear frame 14, and a pair of right and left front sidewalls 82, 82 that extend forward from the box-shaped portion 81. The rear frame 14 is the so-called carbon monocoque frame that is made of carbon fiber-reinforced resin and that is configured such that the box-shaped portion 81 and the front sidewalls 82, 82 are integrally formed. The rear frame 14 is configured to achieve a reduction in weight and to have high strength.

The box-shaped portion 81 is provided with a front wall 83 that vertically extends, an upper wall 84 and a bottom wall 85 that extend rearward from an upper edge and a lower edge of the front wall 83, rear sidewalls 86, 86 that extend rearward respectively from the right and left edges of the front wall 83, and a rear wall 87 for closing a rear surface.

The box-shaped portion 81 composes the rear tank 43. Detailedly, the rear tank 43 is provided with a box-shaped space 88 (a closed space, a fuel tank portion) as a closed space formed inside of the box-shaped portion 81 (Fig. 9), and a bladder tank 89 that is arranged inside of the box-shaped space 88 and that fluid-tightly keeps fuel. The bladder tank 89 is a lightweight balloon-like tank made of resin such as stretchable rubber, and is deformed so as to be arranged along the box-shaped space 88 according to the amount of fuel injected. Note that the tank installed in the box-shaped space 88 may be an aluminum tank or the like with a thin plate formed into a box shape instead of the bladder tank 89.

The box-shaped electric component storage portion 77 recessed downward to a side of the box-shaped space 88 is formed in the center in the vehicle width direction in the front portion of the upper wall 84 of the box-shaped portion 81. An opening formed in an upper surface of the electric component storage portion 77 is closed by a lower surface of the seat 12. A bottom surface 77a (Fig. 9) of the electric component storage portion 77 is inclined downward to the front, and has a front edge positioned upward in comparison with the vertically intermediate portion of the front wall 83. A lower end of a front wall 77b of the electric component storage portion 77 is formed with a drain opening 77c (Fig. 5) that is opened forward. Water or the like intruding into the electric component storage portion 77 is moved downward along the bottom surface portion 77a, and is discharged downward of the rear frame 14 from the drain opening 77c. The front wall 77b is an upper portion of the front wall 83 of the box-shaped portion 81.

Also, a rear surface portion 77d of the electric component storage portion 77 is formed with a recessed portion 77e, and a breather tube connection 89a arranged in an upper portion of the bladder tank 89 is arranged in the recessed portion 77e. The bladder tank 89 communicates with the outside air through a breather tube 90 (Fig. 9) that is pulled out of the breather tube connection 89a and that extends rearward in the box-shaped space 88.

The rear tank 43 is provided over the lower side and the rear side of the electric component storage portion 77.

A rear wall 87 of the box-shaped portion 81 is inclined upward to the rear. The center of the rear wall 87 in the vehicle width direction is formed with a rear wheel avoiding portion 87a (Fig. 9) recessed forwardly upward so as to be arranged along the outer shape of the rear wheel 3, and a clearance between the rear wheel 3 after performing an upward stroke and the rear wall 87 is ensured by the rear wheel avoiding portion 87a.

The rear sidewalls 86, 86 of the box-shaped portion 81 is formed to be wider in the vehicle width direction toward the rear side. For this reason, the capacity of the box-shaped space 88 can be increased, and the large amount of fuel can be reserved in the bladder tank 89. Also, the right and left ends of the rear portion of the box-shaped portion 81 are formed as swelling portions 91 swelling rearward in comparison with the rear wheel avoiding portion 87a and the bladder tank 89 extends also in the swelling portions 91. Thereby, the large amount of fuel can be reserved in the bladder tank 89.

An upper portion of the right swelling portion 91 is formed with a filler opening 89b of the bladder tank 89.

A portion of the front wall 83 of the box-shaped portion 81, located below the front wall 77b, composes a front wall 92 of a tank portion, as a front wall of the box-shaped space 88. A fuel supply port 89c of the bladder tank 89 projects in a front downward direction from a right end of a lower portion of the front wall 92 of the tank portion. The fuel supply port 89c has a hose connection 93 connected with a fuel hose (not shown) connected to the fuel pump 76, and a drain portion 94 manipulated when the fuel is discharged from the fuel supply port 89c.

A rear portion of the upper wall 84 of the box-shaped portion 81 is provided with a pair of seat fixing portions 84a to which the rear portion of the seat 12 is fastened.

A rear edge of the right rear sidewall 86 is provided with a pair of muffler fixing portions 86a for supporting the muffler 67.

With reference to Fig. 1, Fig. 2 and Fig. 6 to Fig. 9, the front sidewalls 82, 82 of the rear frame 14 are plate-like portions that are continuous with the front ends of the rear sidewalls 86, 86 of the box-shaped portion 81 and that extend substantially straight forward. Upper edges 82a of the front sidewalls 82, 82 extend in the longitudinal direction along the lower edge of the front portion of the seat 12. Lower edges 82b of the front sidewalls 82, 82 are inclined forwardly upward along the upper edges of the rear portions of the main frames 16, 16. Front edges 82c of the front sidewalls 82, 82 are arranged along the rear edges of the front tanks 41, 42.

Rail-shaped seat receiving portions 95 extending in the longitudinal direction are formed at the right and left upper edges 82a and the right and left edges of the upper wall 84 of the box-shaped portion 81, and the lower surface of the seat 12 is received in the seat receiving portions 95. Also, a pair of claws 96 engaged with the lower surface of the seat 12 is provided in the vicinity of the front wall 77b of the electric component storage portion 77 on the side of the inner edge of each of the seat receiving portions 95.

A cross member 97 for coupling the inner surfaces of the front sidewalls 82, 82 to each other in the vehicle width direction is provided between the right and left front sidewalls 82, 82. The cross member 97 is formed into a plate-like shape having a substantially rectangle in the plan view, and extends from the front portions of the front sidewalls 82, 82 to the front wall 77b of the electric component storage portion 77. The front sidewalls 82, 82 and the front wall 77b are successively formed with a plate-like rib portion 98 (Fig. 7) that projects toward an inner side between the front sidewalls 82, 82, and the cross member 97 is placed on the rib portion 98 and adhesively connected to the rib portion 98. Thereby, the cross member 97 is integrated with the front sidewalls 82, 82 and the front wall 77b through the rib portion 98. Also, the cross member 97 is arranged rearward and downward so as to have a surface inclined downward to a side of the electric component storage portion 77.

In this way, since the cross member 97 is provided, rigidity of the front sidewalls 82, 82 can be improved. Further, since the cross member 97 extends to the rear side and is coupled to the front wall 77b that vertically extends, rigidity of the rear frame 14 including the front sidewalls 82, 82 can be effectively increased.

Since the cross member 97 is provided, the space inside of the front sidewalls 82, 82 is partitioned into an air cleaner case portion 100 arranged above the cross member 97, and a suspension storage portion 101 arranged below the cross member 97.

The air cleaner case portion 100 is a case-shaped space sectioned by the cross member 97, upper sidewalls 102, 102 of the upper portions of the front sidewalls 82, 82, and the front wall 77b, and is opened upward and forward. An opening formed in an upper surface of the air cleaner case portion 100 is closed by the lower surface of the front portion of the seat 12, and an opening formed in the upper surface of the air cleaner case portion 100 communicates with the side of each of the front tanks 41, 42. A rear wall of the air cleaner case portion 100 composes the front wall 77b of the electric component storage portion 77.

A tray-shaped case lower portion 103 having an opened upper surface is fixed on the lower surface of the cross member 97, and an opening formed in the upper surface of the case lower portion 103 is closed by the cross member 97. Thereby, a box-shaped space is formed below the cross member 97. A front portion of the lower surface of the case lower portion 103 is formed with a tube connection 103a opened downward, and an upper end of the connecting tube 73 (Fig. 5) is coupled to the tube connection 103a.

The center of the cross member 97 is formed with an opening 104 communicating with a side of the case lower portion 103. A rib 104a extending upward is disposed upright over the entire periphery at a peripheral edge of the opening 104.

The air cleaner case portion 100 is provided with an air cleaner element 105 (Fig. 5) for collecting dust or the like in the outside air, and the opening 104 is closed by the air cleaner element 105. Since the air cleaner element 105 is attached to the cross member 97, a space above the air cleaner element 105 in the air cleaner case portion 100 is made to function as a dirty side 106 into which the outside air is taken. Also, when the air cleaner element 105 is attached to the cross member 97, the space inside of the air cleaner element 105 and inside of the case lower portion 103 is made to function as a clean side 107 through which the air cleaned by the air cleaner element 105 is passed.

Portions of the front sidewalls 82, 82 below the cross member 97 form sidewalls 108, 108 of the suspension storage portion 101. Lower ends of the sidewalls 108, 108 extend to the vertically intermediate portions of the pivot frames 17, 17, and cover an upper half portion of the rear suspension unit 26 from the lateral side. Also, the rear suspension unit 26 is covered with the front wall 92 of the tank portion from behind. In this way, since the rear suspension unit 26 is covered with the sidewalls 108, 108 and the front wall 92 of the tank portion, the rear suspension unit 26 can be effectively protected from the external force.

The vertically intermediate portions of the front sidewalls 82, 82, that is, the upper portions of the sidewalls 108, 108 are provided with maintenance openings 108a for exposing the upper portion of the rear suspension unit 26 to the outside. The operator inserts a tool such as a driver from the maintenance openings 108a and adjusts each adjustment portion 26a (Fig. 2) provided on the upper portion of the rear suspension unit 26. Thereby characteristics such as damping force of the rear suspension unit 26 can be easily adjusted.

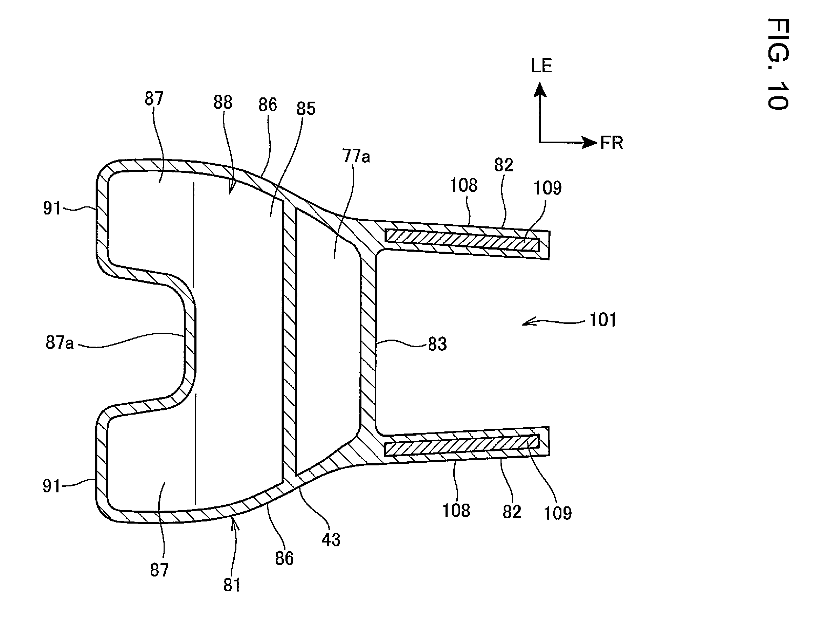

Fig. 10 is a cross-sectional view taken along X-X in Fig. 8. In Fig. 10, graphic illustration of the bladder tank 89 or the like is omitted.

As shown in Fig. 8 and Fig. 10, plate-like honeycomb bodies 109 (honeycomb portions) having a honeycomb structure are buried in the front sidewalls 82, 82. The honeycomb bodies 109 are provided over the upper sidewalls 102, 102 and the sidewalls 108, 108. The honeycomb bodies 109 are arranged such that an axis of each cell of the honeycomb structure is directed in the vehicle width direction. In this way, since the honeycomb bodies 109 are buried in the front sidewalls 82, 82, the thickness of the front sidewalls 82, 82 can be thickened by the parts of the honeycomb bodies 109, and the rigidity of the front sidewalls 82, 82 can be effectively increased by a lightweight structure.

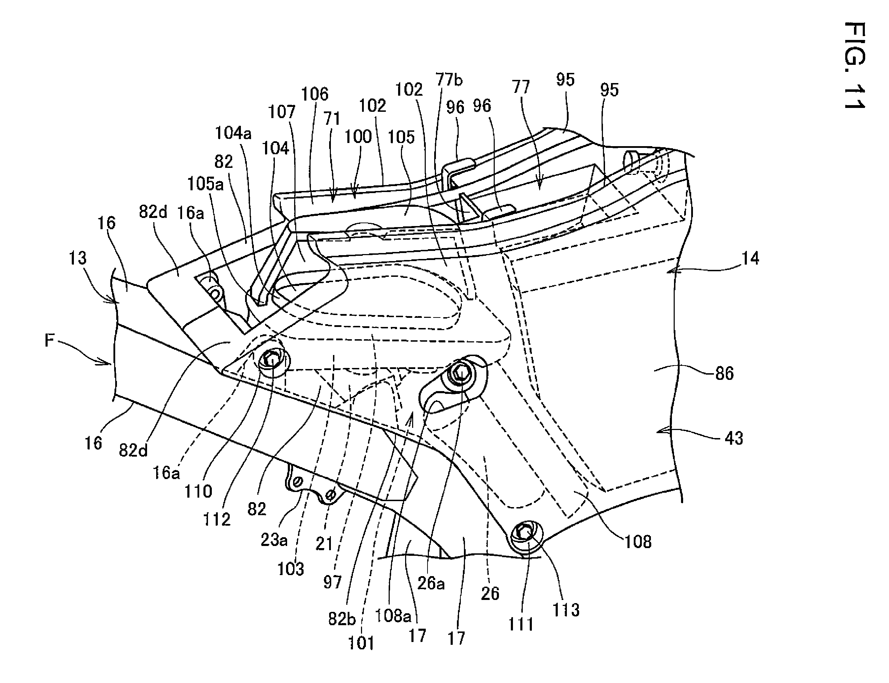

Fig. 11 is a perspective view showing a state in which the rear frame 14 is attached.

As shown in Fig. 2, Fig. 8, Fig. 9 and Fig. 11, in the upper and lower portions at the front ends of the right and left front sidewalls 82, 82, the rear frame 14 includes the upper fastening portion 110 and the lower fastening portion 111 respectively that are fastened to the vehicle body frame F. In the side view, the upper fastening portion 110 and the lower fastening portion 111 are coupled to each other and integrated with each other by the lower edges of the front sidewalls 82, 82 that extend along the upper edges of the main frames 16, 16 and the rear edges of the pivot frames 17, 17.

The upper fastening portion 110 and the lower fastening portion 111 are provided with seat portions 110a, 111a that receive head portions of bolts 112, 113 for fastening the rear frame 14 to the front frame 13, and holes 110b, 111b into which screw portions of the bolts 112, 113 are inserted. The seat portions 110a, 111a are recessed inward in the vehicle width direction, and the head portions of the bolts 112, 113 are stored in the seat portions 110a, 111a.

The upper fastening portions 110, 110 are fastened to the upper frame stays 16a, 16a (Fig. 3 and Fig. 11) of the main frames 16, 16 by the bolts 112, 112.

The lower fastening portions 111, 111 are fastened to the lower frame stays 17b, 17b (Fig. 3 and Fig. 11) of the pivot frames 17, 17 by the bolts 113, 113.

That is, the rear frame 14 is fastened to the rear portion of the front frame 13 at four positions through the upper fastening portions 110, 110 and the lower fastening portions 111, 111 at the front ends of the right and left front sidewalls 82, 82.

As shown in Fig. 1 and Fig. 2, the front tanks 41, 42 are provided with upper swelling portions 41a, 42a that extend to the lower portion of the front end of the seat 12. The front sidewalls 82, 82 of the rear frame 14 have tip ends 82d, 82d that extend to a portion between the upper swelling portions 41a, 42a and the upper edges of the main frames 16, 16, and the upper fastening portions 110, 110 are arranged at the tip ends 82d, 82d. Also, the upper fastening portions 110, 110 are positioned forward of the output shaft 59 (Fig. 2) of the engine 50 in the longitudinal direction, and are positioned higher than the head cover 55 and the reinforcing frame 20 in the vertical direction. The upper fastening portions 110, 110 are arranged in forward and upper positions separated from the fastening portions 111, 111 as much as possible.

The lower fastening portions 111, 111 are arranged at the lower ends of the front edges of the front sidewalls 82, 82, and are positioned rearward of the output shaft 59 of the engine 50.

In this way, the upper fastening portions 110, 110 and the lower fastening portions 111, 111 are coupled to each other and integrated with each other through the front sidewalls 82, 82, and also the upper fastening portions 110, 110 and the lower fastening portions 111, 111 are distributedly arranged in front of and behind the output shaft 59. Thereby, a distance between the upper fastening portions 110, 110 and the lower fastening portions 111, 111 can be lengthened, and stress acting on the connection between the rear frame 14 and the front frame 13 can be effectively dispersed to the front sidewalls 82, 82 for coupling the upper fastening portions 110, 110 to the lower fastening portions 111, 111. For this reason, even in such a structure that the rear tank 43, a heavy load such as the battery 79, and the muffler fixing portion 86a are provided to the resin rear frame 14, stress concentration is suppressed to enable successful fixation of the rear frame 14 to the front frame 13.

Also, since the upper fastening portions 110, 110 are provided at positions with high rigidity in the vicinity of the cross member 97, distortion when fastening the upper fastening portions 110, 110 is reduced. For this reason, the rear frame 14 can be successfully fixed to the upper frame stays 16a, 16a through the upper fastening portions 110, 110.

In such a structure that the front sidewalls 82, 82 for coupling the upper fastening portions 110, 110 to the lower fastening portions 111, 111 are lengthened, stress can be dispersed; however, since the lateral side of the rear suspension unit 26 is covered with the front sidewalls 82, 82, heat from the engine 50 is likely to be stayed in the suspension storage portion 101. In the embodiment, since air moves in and out through the right and left maintenance openings 108a, heat from the suspension storage portion 101 can be released, and a thermal effect on the rear suspension unit 26 can be prevented. Further, since the suspension storage portion 101 communicates with the electric component storage portion 77 through the drain opening 77c (Fig. 5), air in the suspension storage portion 101 is bled from the drain opening 77c to the electric component storage portion 77. The electric component storage portion 77 is only covered simply with the seat 12, and the air in the electric component storage portion 77 is easily led to flow to the outside. For this reason, heat from the suspension storage portion 101 can be effectively discharged to the outside through the drain opening 77c. On the other hand, water or the like intruding into the electric component storage portion 77 is passed through the suspension storage portion 101 from the drain opening 77c and is discharged downward.

As shown in Fig. 1 and Fig. 7, the front sidewalls 82, 82 are portions positioned above the steps 39, 39, and compose a grip portion for holding the vehicle body by sandwiching the vehicle body between the legs of the occupant standing on the steps 39, 39. In the case of an off-road type vehicle, the occupant often rides the vehicle while standing on the steps 39, 39. Therefore, Fig. 1 shows a state in which the occupant stands.

In the embodiment, the front sidewalls 82, 82 are formed to have a narrow width in the vehicle width direction in comparison with the rear sidewalls 86, 86 so as to be continuous with the width of the seat 12. Therefore, the front sidewalls 82, 82 do not become an obstacle to the occupant, and the degree of freedom in a riding posture is improved. Also, the rear tank 43 is provided inside of the rear sidewalls 86, 86 behind the front sidewalls 82, 82 as the grip portion. Therefore, the large-capacity rear tank 43 can be provided without any influence on the degree of freedom in the riding posture.

Also, the front sidewalls 82, 82 sandwiched between the legs of the occupant are reinforced by the honeycomb bodies 109, are thickened, and have high rigidity. Thereby, the occupant can feel rigid impression, and maneuverability is excellent.

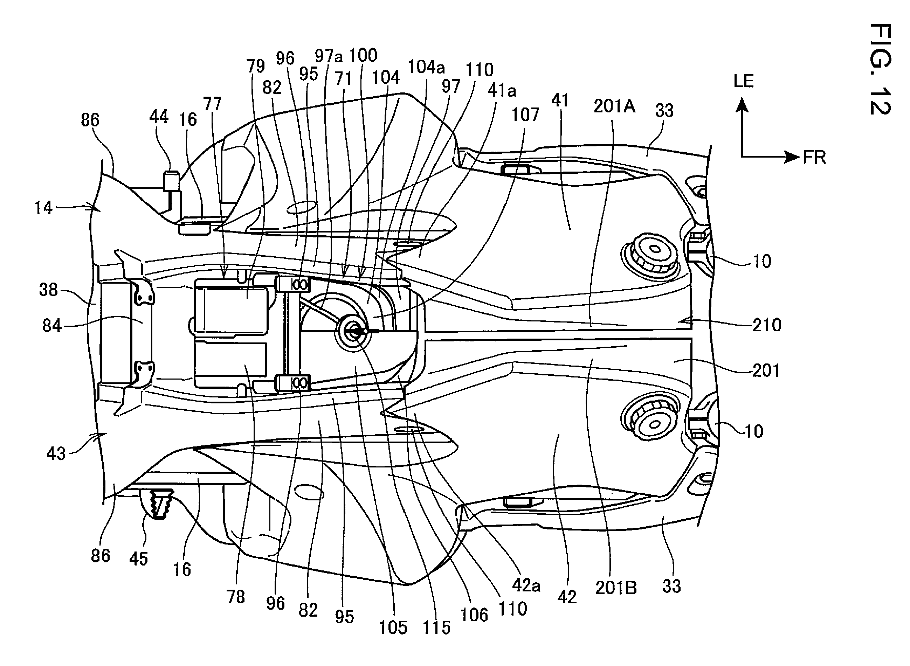

Fig. 12 is a plan view with the air cleaner 71 and the front tanks 41, 42 viewed from above. Fig. 12 shows the state in which the tank cover 34 and the seat 12 are detached and also illustrates only the right side of the air cleaner element 105.

As shown in Fig. 5 to Fig. 7, Fig. 9, Fig. 11 and Fig. 12, the air cleaner 71 is provided with the air cleaner case portion 100, the air cleaner element 105, and the case lower portion 103.

The air cleaner element 105 is a box-shaped sponge body having an opened lower surface, and a frame-shaped portion 105a of the lower surface is positioned to the cross member 97 by being fitted to an outer peripheral surface of the rib 104a. Also, the air cleaner element 105 is fixed by a screw 115 to a frame portion 97a provided to the cross member 97 on the inner side of the air cleaner element 105.

The front portion of the case lower portion 103 is provided with a hose connection 103b connected with a hose 117 (Fig. 5) for allowing the case lower portion 103 to communicate with the cylinder head 54. Blow-by gas in the engine 50 is returned to the clean side 107 through the hose 117, and is sucked again.

As shown in Fig. 12, the front tanks 41, 42 are divided substantially symmetrically based on the center in the vehicle width direction, and tank recessed portions 201A, 201B that are recessed downward are formed to extend in the longitudinal direction at the inner ends of the upper portions of the front tanks 41, 42. The tank recessed portions 201A, 201B are joined together, thereby forming the recessed portion 201 in the upper portions of the front tanks 41, 42, the recessed portion 201 extending from the rear side of the head pipe 15 to the front side of the air cleaner case portion 100 and having a recessed shape. The tank cover 34 (Fig. 2) and the seat 12 are attached to close the upper surface of the recessed portion 201. Thereby, the upper portions of the front tanks 41, 42 are formed with a duct-shaped outside air supply passage 210 through which the outside air sucked into the air cleaner 71 is passed. Since the outside air supply passage 210 extends linearly, ventilation resistance is reduced and intake efficiency is improved.

The outside air is led to flow into the dirty side 106 of the air cleaner case portion 100 through the outside air supply passage 210, is cleaned when passed through the air cleaner element 105, is led to flow to the clean side 107, and is supplied to the engine 50 through the connecting tube 73 and the throttle body 72.

In the embodiment, the outside air supply passage 210 is formed in the upper portions of the front tanks 41, 42, the air cleaner element 105 is fixed to the cross member 97 for reinforcing the front sidewalls 82, 82 of the rear frame 14 behind the front tanks 41, 42, and the air cleaner case portion 100 is partitioned by the front sidewalls 82, 82. Therefore, the air cleaner 71 can be provided at a position with high intake efficiency by a simple structure using the cross member 97.

As has been described above, according to the embodiment applied with the present invention, the resin rear frame 14 supported on the front frame 13 through the upper fastening portions 110, 110 and the lower fastening portions 111, 111 of the front portion is provided with the pair of upper and lower fastening portions 110, 111. The upper fastening portions 110, 110 are attached to the main frames 16, 16 at the position forward of the output shaft 59, the lower fastening portions 111, 111 are attached to the pivot frames 17, 17 at the position behind the output shaft 59, and the front sidewalls 82, 82 are provided for coupling the upper fastening portions 110, 110 to the lower fastening portions 111, 111 along the front frame 13. Thereby, the upper fastening portions 110, 110 and the lower fastening portions 111, 111 are distributedly arranged in front of and behind the output shaft 59 to achieve securement of the wide interval between the upper fastening portions 110, 110 and the lower fastening portions 111, 111 and suppression of the stress concentration on the front portion of the rear frame 14. For this reason, the rear frame 14 can be successfully fixed on the front frame 13. Also, since the stress concentration on the front portion can be effectively dispersed to the front sidewalls 82, 82 by the front sidewalls 82, 82 for coupling the upper fastening portions 110,110 to the lower fastening portions 111, 111, the stress concentration can be suppressed and the rear frame 14 can be successfully fixed.

Also, the upper fastening portions 110, 110 are arranged at the position above the head cover 55 of the engine 50 and far from the lower fastening portions 111, 111. For this reason, the stress concentration on the front portion of the rear frame 14 can be effectively suppressed, and the rear frame 14 can be successfully fixed on the front frame 13.

Also, the front sidewalls 82, 82 have rear portions that are coupled to the rear sidewalls 86, 86 as the sidewalls of the box-shaped space 88 as the closed space. For this reason, the box-shaped space 88 can be reinforced by the front sidewalls 82, 82.

Further, the front sidewalls 82, 82 are provided in the inside thereof the honeycomb bodies 109. For this reason, the front sidewalls 82, 82 can be lightened while thickening the front sidewalls 82, 82 in the vehicle width direction to ensure the rigidity.

Also, the front sidewalls 82, 82 are arranged above the occupant steps 39, 39 and below the front portion of the seat 12, and the box-shaped space 88 is made to function as the fuel tank portion for reserving the fuel. For this reason, the degree of freedom in the riding posture can be increased by ensuring the occupant leg straddling space, and also the rear tank 43 can be formed to have the large capacity by arranging the box-shaped space 88 in the rear position not to cause the obstruction with respect to the legs.

Also, the rear suspension unit 26 is arranged between the right and left front sidewalls 82, 82 and forward of the front wall 92 of the tank portion of the box-shaped space 88. For this reason, the rear suspension unit 26 can be protected by the right and left front sidewalls 82, 82 and the front wall 92 of the tank portion of the box-shaped space 88.

Also, the front sidewalls 82, 82 are provided with the maintenance openings 108a formed in the lateral sides of the rear suspension unit 26, the electric component storage portion 77 is formed integrally with the rear frame 14 above the box-shaped space 88 and behind the rear suspension unit 26, and the lower end of the front wall 77b of the electric component storage portion 77 is formed with the drain opening 77c. For this reason, the air can be discharged from the maintenance openings 108a and the drain opening 77c, and the temperature rise of the rear suspension unit 26 can be suppressed.

Also, according to the embodiment applied with the present invention, the resin rear frame 14 has the right and front sidewalls 82, 82 having the upper fastening portions 110, 110, the air cleaner case portion 100 is provided with the cross member 97 for coupling the right and left front sidewalls 82, 82 to each other, and the air cleaner element 105 is attached to the cross member 97 to thereby separate the clean side 107 from the dirty side 106. Thereby, the air cleaner case portion 100 can be formed using the cross member 97, and the structure of the air cleaner case portion 100 can be simplified while reinforcing the rear frame 14 by the cross member 97.

Also, the rear portion of the rear frame 14 is provided with the box-shaped electric component storage portion 77, the rear wall of the air cleaner case portion 100 is arranged to extend in the vertical direction to compose the front wall 77b of the electric component storage portion 77, and the cross member 97 is arranged to extend in the longitudinal direction from the upper fastening portions 110, 110 toward the front wall 77b. For this reason, the rear frame 14 can be efficiently reinforced in such a manner that the cross member 97 extending in the longitudinal direction from the upper fastening portions 110, 110 toward the front wall 77b is coupled to the rear wall as the front wall 77b of the electric component storage portion 77.

Also, the rear frame 14 is reinforced by the cross member 97 to thereby arrange the rear tank 43 as the heavy load and the large-size component below and behind the electric component storage portion 77, and it is not necessary to provide the rear tank 43 on the sides of the right and left front sidewalls 82, 82. For this reason, the structure in the vicinity of the front sidewalls 82, 82 can be downsized.

Further, the rear tank 43 is provided with the box-shaped space 88 that is formed integrally with the rear frame 14, and the bladder tank 89 that is arranged in the box-shaped space 88 and that fluid-tightly keeps the fuel. Thereby, a role of each of the components can be allotted so that the load is supported by the box-shaped space 88 formed integrally with the rear frame 14 and the bladder tank 89 fluid-tightly keeps the fuel, and the rear frame 14 is thinned to achieve the reduction in weight.

Also, the pair of upper fastening portions 110, 110 and the pair of lower fastening portions 111, 111 are provided to the rear frame 14 in the vertical direction, and the right and left front sidewalls 82, 82 couple the upper fastening portions 110, 110 to the lower fastening portions 111, 111 along the front frame 13. Thereby, the wall of the air cleaner case portion 100 can be configured using the comparatively large front sidewalls 82, 82 for coupling the upper fastening portions 110, 110 to the lower fastening portions 111, 111.

Note that the above-mentioned embodiment merely shows one embodiment applied with the present invention. The present invention is not limited to the above-mentioned embodiment.

The above-mentioned embodiment has been described such that the plate-like honeycomb bodies 109 are buried inside of the front sidewalls 82, 82. However, the present invention is not limited thereto. For example, instead of the honeycomb bodies 109, portions with the honeycomb bodies 109 buried may be used as the space portion. In this case, the thickness of the front sidewalls 82, 82 can be increased by the part of the space, and the rigidity can be improved while achieving the reduction in weight.

Also, the above-mentioned embodiment has been described such that the rear tank 43 is provided below and behind the electric component storage portion 77. However, the present invention is not limited thereto. The rear tank may be arranged only below the electric component storage portion 77 or only behind the electric component storage portion 77. That is, the rear tank has only to be arranged below and/or behind the electric component storage portion 77.
- 1: Motorcycle
- 12: Seat
- 13: Front frame
- 14: Rear frame
- 15: Head pipe
- 16, 16: Main frame
- 17, 17: Pivot frame
- 26: Rear suspension unit (rear cushion)
- 39, 39: Step
- 50: Engine
- 50a: Cylinder portion
- 52: Crankcase
- 55: Head cover (cylinder upper end)
- 59: output shaft
- 77: Electric component storage portion (electric component box)
- 77b: Front wall (front wall of electric component box)
- 77c: Drain opening
- 81: Box-shaped portion
- 82, 82: Front sidewall
- 86, 86: Rear sidewall
- 88: Box-shaped space (closed space, fuel tank portion)
- 92: Front wall of tank portion (front wall of fuel tank portion)
- 108a: Maintenance opening
- 109: Honeycomb body (honeycomb portion)
- 110, 110: Upper fastening portion (fastening portion)
- 111, 111: Lower fastening portion (fastening portion)

## Claims

1. A motorcycle comprising:
a front frame (13) that includes a pair of right and left main frames (16, 16) extending rearward from a head pipe (15) and a pair of right and left pivot frames (17, 17) coupled to rear portions of the respective main frames (16, 16) and extending in a vertical direction;
a rear frame structure having a resin rear frame (14) that is supported on the front frame (13) through front fastening portions (110, 111), that is provided with a closed space (88) formed in a rear portion thereof, and that supports a seat (12) above the closed space (88); and
an engine (50) that includes a crankcase (52) provided with an output shaft (59) and a cylinder portion (50a) projecting upward from the crankcase (52) and that is supported on the front frame (13), wherein
an upper and a lower pair of fastening portions (110, 111) are provided, the upper fastening portions (110, 110) being attached to the main frames (16, 16), the lower fastening portions (111, 111) being attached to the pivot frames (17, 17) in a portion positioned rearward of the output shaft (59), **characterized in that**
the rear frame (14) is provided with a pair of right and left front sidewalls (82, 82) for coupling the respective upper fastening portions (110, 110) to the respective lower fastening portions (111, 111) along the front frame (13), and
the upper fastening portions (111, 111) are attached to the main frames (16, 16) in a portion positioned forward of the output shaft (59).

2. The motorcycle according to claim 1, wherein
each of the upper fastening portions (110, 110) is arranged above a cylinder upper end (55) of the engine (50).

3. The motorcycle according to claim 1 or 2, wherein
each of the front sidewalls (82, 82) has a rear portion that is coupled to a rear sidewall (86) as a sidewall of the closed space (88).

4. The motorcycle according to any of claims 1 to 3, wherein
each of the front sidewalls (82, 82) is provided with in the inside thereof a honeycomb portion (109).

5. The motorcycle according to any of claims 1 to 4, wherein
each of the front sidewalls (82, 82) is arranged above an occupant step (39) and below a front portion of the seat (12), and
the closed space (88) functions as a fuel tank portion for storing fuel.

6. The motorcycle according to claim 5, wherein
a rear cushion (26) is arranged between the right and left front sidewalls (82, 82) and forward of a front wall (92) of the fuel tank portion.

7. The motorcycle according to claim 6, wherein
each of the front sidewalls (82, 82) is provided with a maintenance opening (108a) formed in a lateral side of the rear cushion (26), and
an electric component box (77) is formed integrally with the rear frame (14) above the fuel tank portion and behind the rear cushion (26), the electric component box (77) having a front wall (77b) provided with a drain opening (77c) formed in a lower end of the front wall (77b).

## Patentansprüche

1. Motorrad, aufweisend:
einen vorderen Rahmen (13), der ein Paar eines rechten und eines linken Hauptrahmens (16, 16) umfasst, dass sich von einem Kopfrohr (15) nach hinten erstreckt, und ein Paar eines rechten und eines linken Drehrahmens (17, 17), das an hinteren Abschnitten des jeweiligen Hauptrahmens (16, 16) verbunden ist und sich in vertikaler Richtung erstreckt;
eine hintere Rahmenkonstruktion, die einen hinteren Kunststoffrahmen (14) hat, der an dem vorderen Rahmen (13) über vordere Befestigungsabschnitte (110, 111) getragen wird, und der mit einem geschlossenen Raum (88) versehen ist, der in seinem hinteren Abschnitt gebildet ist und der einen Sitz (12) oberhalb des geschlossenen Raums (88) trägt; und
einen Motor (50), der ein Kurbelgehäuse (52) umfasst, das mit einer Ausgangswelle (59) und einem Zylinderabschnitt (50a) versehen ist, der sich nach oben aus dem Kurbelgehäuse (52) erstreckt, und der in dem vorderen Rahmen (13) getragen wird, wobei
ein oberes und ein unteres Paar von Befestigungsabschnitten (110, 111) vorgesehen ist, wobei die oberen Befestigungsabschnitte (110, 110) an den Hauptrahmen (16, 16) befestigt sind, die unteren Befestigungsabschnitte (111, 111) in einem Abschnitt an den Drehrahmen (17, 17) befestigt sind, der hinter der Ausgangswelle (59) positioniert ist, **dadurch gekennzeichnet, dass**
der hintere Rahmen (14) mit einem Paar einer linken und einer rechten vorderen Seitenwand (82, 82) versehen ist, zum Verbinden des jeweiligen oberen Befestigungsabschnitts (110, 110) an dem jeweiligen unteren Befestigungsabschnitt (111, 111) entlang dem vorderen Rahmen (13), und
die oberen Befestigungsabschnitte (111, 111) an den Hauptrahmen (16, 16) in einem Abschnitt befestigt sind, der vor der Ausgangswelle (59) positioniert ist.

2. Motorrad gemäß Anspruch 1, wobei
jeder obere Befestigungsabschnitt (110, 110) oberhalb eines oberen Zylinderendes (55) des Motors (50) angeordnet ist.

3. Motorrad gemäß Anspruch 1 oder 2, wobei
jede vordere Seitenwand (82, 82) einen hinteren Abschnitt hat, der mit einer hinteren Seitenwand (86) als Seitenwand des geschlossenen Raums (88) verbunden ist.

4. Motorrad gemäß irgendeinem der Ansprüche 1 bis 3, wobei
jede vordere Seitenwand (82, 82) an ihrer Innenseite mit einem Wabenstrukturabschnit (109) versehen ist.

5. Motorrad gemäß irgendeinem der Ansprüche 1 bis 4, wobei
jede vordere Seitenwand (82, 82) oberhalb einer Beifahrerfußstütze (39) und unterhalb eines vorderen Abschnitts des Sitzes (12) angeordnet ist und
der geschlossene Raum (88) als Kraftstofftankabschnitt zum Speichern von Kraftstoff dient.

6. Motorrad gemäß Anspruch 5, wobei
ein hinteres Sitzkissen (26) zwischen der rechten und linken Seitenwand (82, 82) angeordnet ist und vorderhalb einer vorderen Wand (92) des Kraftstofftankabschnitts.

7. Motorrad gemäß Anspruch 6, wobei
jede vordere Seitenwand (82, 82) mit einer Wartungsöffnung (108a) versehen ist, die an einer seitlichen Seite des hinteren Sitzkissens (26) ausgebildet ist, und
eine Elektrikkomponentenbox (77) einstückig mit den hinteren Rahmen (14) oberhalb des Kraftstofftankabschnitts und hinter dem Sitzkissen (26) ausgebildet ist, wobei die Elektrikkomponentenbox (77) eine vordere Wand (77b) hat, die mit einer Ablauföffnung (77c) versehen ist, die in einem unteren Ende der vorderen Wand (77b) ausgebildet ist.

## Revendications

1. Motocycle comprenant :
un cadre avant (13) qui inclut une paire de cadres principaux droit et gauche (16, 16) s'étendant vers l'arrière d'un tube de direction (15) et une paire de cadres pivots droit et gauche (17, 17), couplés à des portions arrière des cadres principaux (16, 16) respectifs et s'étendant dans une direction verticale ;
une structure de cadre arrière comportant un cadre arrière en résine (14) et supportée sur le cadre avant (13) par l'intermédiaire de portions d'arrimage avant (110, 111), qui est pourvue d'un espace fermé (88) formé dans une portion arrière de celle-ci, et qui supporte une selle (12) au-dessus de l'espace fermé (88) ; et
un moteur (50) qui inclut un carter de moteur (52) pourvu d'un arbre de sortie (59) et d'une portion de cylindre (50a) faisant saillie vers le haut depuis le carter de moteur (52) et qui est supportée sur le cadre avant (13), dans lequel
une paire supérieure et une paire inférieure de portions d'arrimage (110, 111) sont prévues, les portions d'arrimage supérieures (110, 110) étant fixées aux cadres principaux (16, 16), les portions d'arrimage inférieures (111, 111) étant fixées aux cadres pivots (17, 17) dans une portion positionnée vers l'arrière de l'arbre de sortie (59), **caractérisé en ce que**
le cadre arrière (14) est pourvu d'une paire de parois latérales avant droite et gauche (82, 82) pour coupler les portions d'arrimage supérieures (110, 110) respectives aux portions d'arrimage inférieures (111, 111) respectives le long du cadre avant (13),
et
les portions d'arrimage supérieures (111, 111) sont fixées aux cadres principaux (16, 16) dans une portion positionnée à l'avant de l'arbre de sortie (59).

2. Motocycle selon la revendication 1, dans lequel
chacune des portions d'arrimage supérieures (110, 110) est agencée au-dessus d'une extrémité supérieure de cylindre (55) du moteur (50).

3. Motocycle selon la revendication 1 ou 2, dans lequel
chacune des parois latérales avant (82, 82) a une portion arrière qui est couplée à une paroi latérale arrière (96) en tant que paroi latérale de l'espace fermé (88).

4. Motocycle selon l'une quelconque des revendications 1 à 3, dans lequel
chacune des parois latérales avant (82, 82) est pourvue d'une portion en nid-d'abeilles (109) dans son intérieur.

5. Motocycle selon l'une quelconque des revendications 1 à 4, dans lequel
chacune des parois latérales avant (82, 82) est agencée au-dessus d'un repose-pied occupant (39) et en dessous d'une portion avant de la selle (12), et
l'espace fermé (88) fait office de portion de réservoir de carburant permettant de stocker du carburant.

6. Motocycle selon la revendication 5, dans lequel
un amortisseur arrière (26) est agencé entre les parois latérales avant droite et gauche (82, 82) et à l'avant d'une paroi avant (92) de la portion de réservoir de carburant.

7. Motocycle selon la revendication 6, dans lequel chacune des parois latérales avant (82, 82) est pourvue d'une ouverture d'entretien (108a) formée dans un côté latéral de l'amortisseur arrière (26), et
un coffret de composants électriques (77) est formé solidairement avec le cadre arrière (14) au-dessus de la portion de réservoir de carburant et derrière l'amortisseur arrière (26), le coffret de composants électriques (77) ayant une paroi avant (77b) pourvue d'une ouverture de purge (77c) formée dans une extrémité inférieure de la paroi avant (77b).
